Europäisches Patentamt

European Patent Office

Office européen des brevets

(19)

(11) Numéro de publication : **0 445 053 A1**

# (12) DEMANDE DE BREVET EUROPEEN

(21) Numéro de dépôt : **91420070.4**

(22) Date de dépôt : **01.03.91**

(51) Int. Cl.⁵ : **G01N 35/02, B04B 5/04, G01N 33/48**

(30) Priorité : **02.03.90 FR 9002896**

(43) Date de publication de la demande :
**04.09.91 Bulletin 91/36**

(84) Etats contractants désignés :
**AT BE CH DE DK ES FR GB GR IT LI LU NL SE**

(71) Demandeur : **GESPAC INSTRUMENTS (S.A.)**
**Les Playes**
**F-83500 La Seyne sur Mer (FR)**

(72) Inventeur : **Stoffel, François**
**214, avenue Joseph Reynaud, Bâtiment B- Le Prado**
**F-83140 Six-Fours (FR)**

(74) Mandataire : **Monnier, Guy et al**
**Cabinet Monnier 150 Cours Lafayette B.P. 3058**
**F-69393 Lyon Cédex 03 (FR)**

(54) Automate analyseur pour le groupage sanguin.

(57)   Automate analyseur pour le groupage sanguin comportant d'une part une centrifugeuse (300) pour la mise en place des micro-plaquettes (400) et leur centrifugation, comportant deux supports opposés (318) articulés aux extrémités (314) d'une poutre (313) entraînée en rotation par un moteur pas à pas (312), et d'autre part une pince de transfert (500) commandée suivant les axes des abscisses XX' et des ordonnées YY' par deux moteurs pas à pas (520, 521) de manière à transporter les micro-plaquettes (400) de la centrifugeuse (300) aux différents postes de travail établis sur une table (200).

EP 0 445 053 A1

*Fig.1*

100  200  300  400  400  520  515  512  521  516  320  400  800  612  700  950  910  500  714  900  201  707  600

## LA PRESENTE INVENTION A TRAIT A LA DETERMINATION DES GROUPAGES SANGUINS

On connaît dans ce domaine des appareils semi-automatiques qui permettent la distribution des produits à mélanger. Ils comprennent généralement un passeur de tubes pourvu sur sa périphérie d'un certain nombre d'encoches et associé à une sonde de prélèvement pour le transfert des produits contenus dans des tubes échantillons. Dans les encoches sont disposés les tubes échantillons contenant soit du sang centrifugé de chacun des patients dont le groupe est à déterminer, soit des réactifs de teneurs différentes et dont le nombre peut varier suivant le type d'analyses effectuées. La sonde prélève tout d'abord une quantité de sang centrifugé d'un patient pour la répartir suivant une ligne ou une colonne d'alvéoles d'une micro-plaquette et ceci pour chaque patient ; ensuite, elle distribue un réactif selon le même procédé et cela pour chaque réactif de manière à obtenir le résultat du type d'analyses recherchées.

Lorsque la distribution des différents sangs et réactifs est terminée, la micro-plaquette est transportée manuellement dans une centrifugeuse de façon à induire la réaction.

Ensuite, la micro-plaquette est placée manuellement sur un lecteur de micro-plaquette pour analyser les résultats afin de déterminer le groupe sanguin de chacun des patients. Pour que la recherche puisse être considérée comme valable, elle doit être recommencée une seconde fois, mais avec des réactifs différents de manière à confirmer la première recherche.

On comprend aisément qu'une telle recherche devient rapidement fastidieuse et compliquée lorsque le nombre des patients est important en pouvant entraîner une erreur de lecture qui peut avoir des conséquences graves par la suite.

C'est à ces inconvénients qu'entend plus spécialement remédier la présente invention, plus particulièrement en limitant les interventions humaines pour diminuer les risques d'erreurs.

La présente invention a pour objet un automate analyseur, caractérisé en ce qu'il comprend d'une part une centrifugeuse pour la mise en place des micro-plaquettes et leur centrifugation, comportant deux supports opposés, articulés aux extrémités d'une poutre entraînée en rotation par un moteur à courant continu, et d'autre part une pince transfert commandée suivant les axes des abscisses XX' et des ordonnées YY' par deux moteurs pas à pas de manière à transporter les micro-plaquettes de la centrifugeuse aux différents postes de travail établis sur une table.

Le dessin annexé, donné à titre d'exemple, permettra de mieux comprendre l'invention, les caractéristiques qu'elle présente et les avantages qu'elle est susceptible de procurer :

Fig. 1 est une vue d'ensemble des éléments composant l'automate analyseur suivant l'invention.

Fig. 2 est une coupe représentant le poste pour la centrifugation des micro-plaquettes ;

Fig. 3 est une vue en perspective de l'un des supports de la centrifugeuse ;

Fig. 4 est une vue de détail des moyens pour le blocage de la micro-plaquette dans le support ;

Fig. 5 à 7 illustrent la mise en place et le verrouillage des micro-plaquettes ;

Fig. 8 est une vue en perspective montrant la pince permettant le transport des micro-plaquettes ;

Fig. 9 est une coupe montrant les moyens pour le blocage de la micro-plaquette dans la pince ;

Fig. 10 est une vue du poste pour le prélèvement des produits ;

Fig. 11 est une vue du poste pour la distribution des produits à prélever.

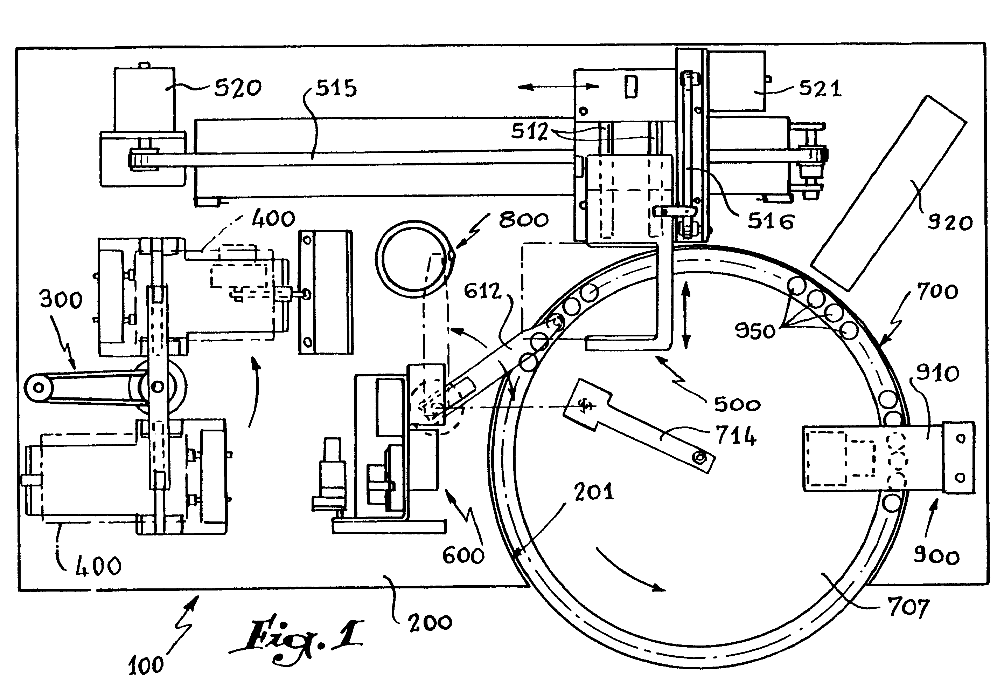

On a représenté en fig. 1 un automate analyseur 100 comportant une table de transfert 200 sur laquelle sont disposés différents postes de travail :

– un poste 300 pour la mise en place et la centrifugation de micro-plaquettes 400 montrées en traits mixtes ;

– un poste de transfert 500 des micro-plaquettes 400 ;

– un poste 600 pour le prélèvement des produits à répartir ;

– un poste 700 pour la distribution des produits à prélever ;

– un poste 800 pour la lecture des résultats de la réaction ;

– un poste 900 pour l'identification des tubes échantillons 950.

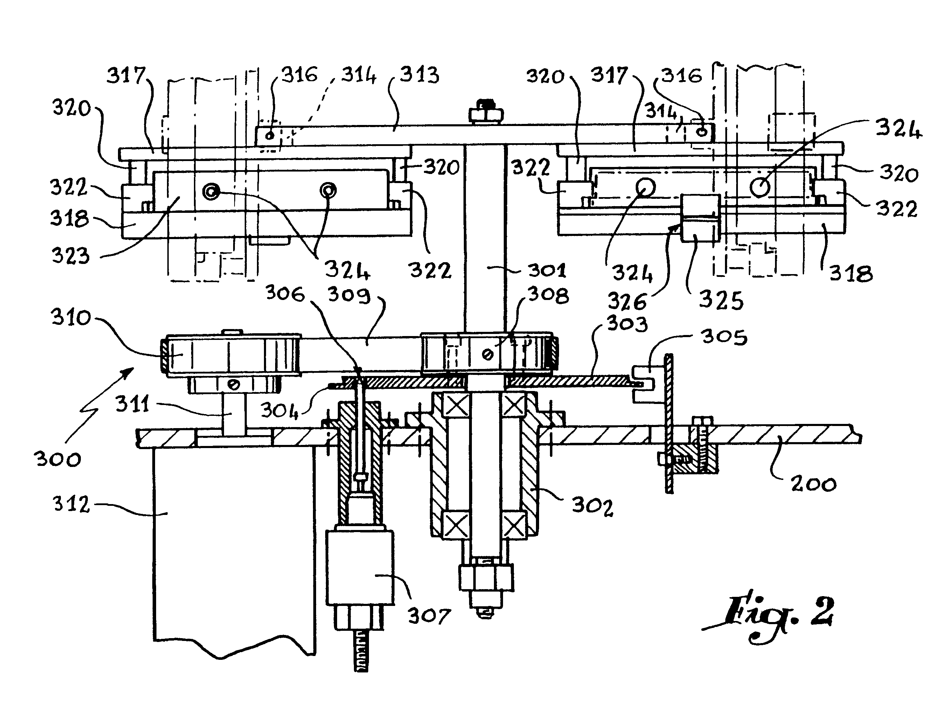

On a illustré en fig. 2 le poste de centrifugation 300 qui comprend un arbre de rotation 301 guidé axialement par un dispositif à roulements 302 traversant verticalement et de part en part la table de transfert 200. Au-dessus du dispositif à roulements 302 est fixé un disque 303 comportant d'une part sur sa périphérie un épaulement 304 qui coopère avec un capteur 305, et d'autre part un trou débouchant 306 qui permet le passage d'un doigt d'indexation 307 propre à bloquer l'arbre 301 à une même et unique position.

Au milieu de l'arbre de rotation 301 est fixée une poulie 308 qui, par l'intermédiaire d'une courroie 309, est reliée à une autre poulie 310 montée à l'extrémité libre de l'arbre de sortie 311 d'un moteur à courant continu 312 en vue d'entraîner ledit arbre 301 en rotation.

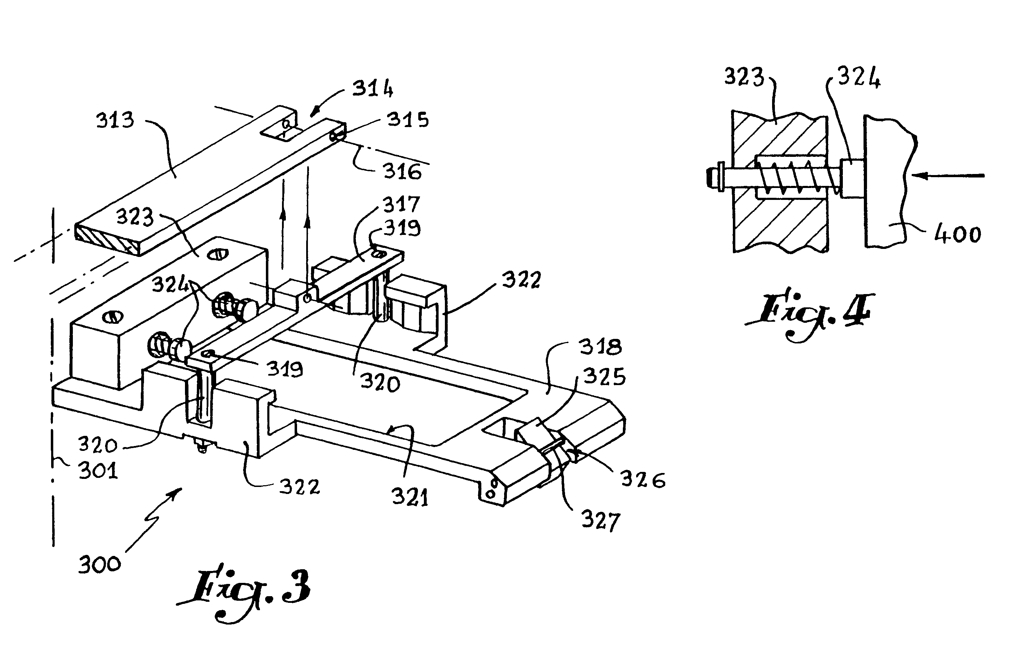

Le bout supérieur de l'arbre 301 supporte une poutre 313 dont les extrémités en forme de chape 314 (voir fig. 3) sont percées d'un alésage 315 pour le passage d'un axe de rotation 316 monté sur roulements à aiguilles.

Entre les bras de chaque chape 314 s'engage une barre horizontale 317 pouvant pivoter autour de l'axe 316 et solidaire d'un support de micro-plaquette 318 par l'intermédiaire de vis 319 munies d'entretoises 320 de façon à être décalées en hauteur par rapport audit support 318.

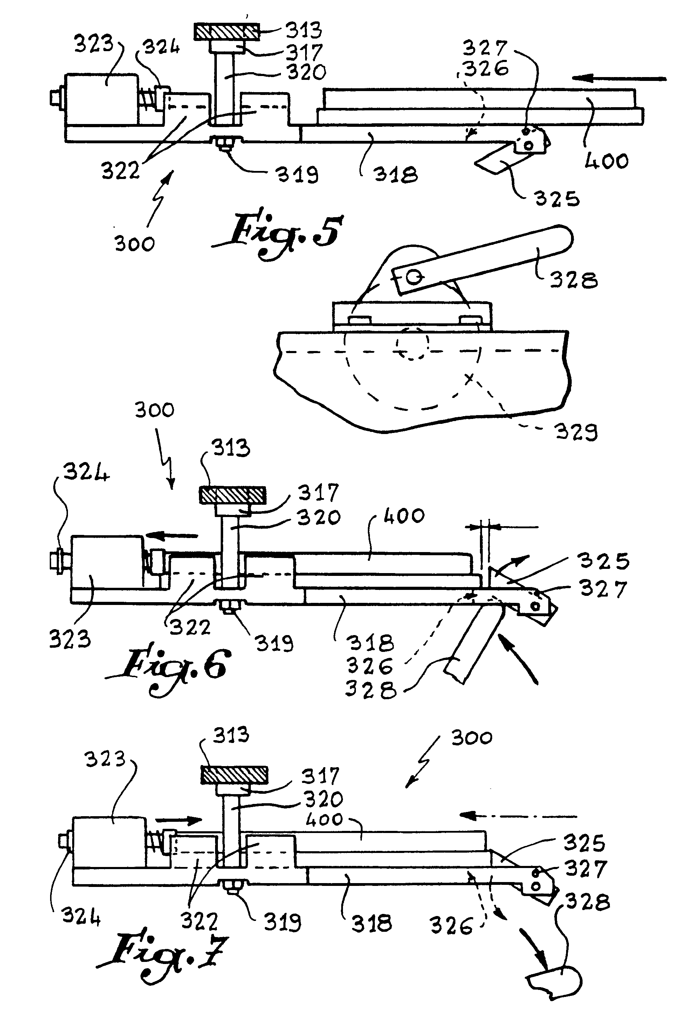

Le support de micro-plaquette 318 ayant une forme en T dans lequel a été ménagé un évidement 321, comporte d'une part dans la partie horizontale du T et sur chacun de ses bords latéraux, des brides rainurées 322 établies de chaque côté des vis de fixation 319, et d'autre part dans la partie verticale du T un bloc 323 pourvu de butées à ressort 324 (fig. 4) auxquelles est opposé un verrou basculant 325 logé dans une encoche 326 munie d'une butée 327 afin de limiter la rotation dudit verrou.

Les figures 5 à 7 illustrent la mise en place et le verrouillage d'une micro-plaquette 400 dans un support 318 de la centrifugeuse 300 de l'automate analyseur 100. La mise en place de la micro-plaquette 400 s'effectue manuellement, tandis que le verrouillage se réalise d'une part à l'aide de la pince de transfert 500 et d'autre part avec un doigt 328 commandé en rotation par un moteur pas à pas 329 fixé dans la table 200.

Le fonctionnement permettant le verrouillage de la micro-plaquette sera mieux expliqué plus loin.

En fig. 8, on a représenté la pince transfert 500 réalisée en une matière synthétique, comportant dans sa partie avant un évidement 501 en forme de U renversé de sorte que son ouverture se trouve sur l'un des bords les plus larges de ladite pince.

Chacune des faces intérieures et opposées 502 et 503 de l'évidement 501 est pourvue de rainures 504 et 505 permettant de guider axialement et de maintenir la micro-plaquette 400 en coopérant avec les épaulements 401 prévus sur sa périphérie.

On peut remarquer que la micro-plaquette 400, connue en soi, comporte d'une part sur sa face supérieure 402 une série d'alvéoles 403 rangés suivant 8 lignes et 12 colonnes et d'autre part des épaulements 401 striés en 404 dont on expliquera mieux plus loin la fonction.

La face avant 506 de la pince 500 est percée de deux trous 507 et 508 débouchant dans la rainure 505 de la face interne 503 de l'évidement 501 en vue de la fixation de deux butées à bille 509 (fig. 9) et 510 qui coopèrent avec les stries 404 de l'épaulement 401 de la micro-plaquette 400 afin de la retenir axialement dans la pince 500.

Une encoche 511 est ménagée dans la face opposée à l'ouverture de l'évidement 501, de manière à laisser un passage au verrou basculant 325 du support de micro-plaquette 318 lors du verrouillage de la micro-plaquette 400.

La pince 500 est traversée dans sa partie arrière par deux colonnes 512 et 513, solidaires à l'une de leurs extrémités d'un support mobile 514 commandé en translation suivant l'axe des abscisses XX' par une courroie 515 et un moteur pas à pas 520 représenté (fig. 1). Le coulissement de la pince 500 le long des colonnes 512 et 513 s'effectue par une autre courroie 516 fixée sur ladite pince par l'intermédiaire d'un clip 517 et entraînée par un autre moteur pas à pas 521 (fig. 1).

Les déplacements de la pince 500 suivant l'axe des abscisses XX' ou des ordonnées YY' peuvent être soit simultanés, soit indépendants.

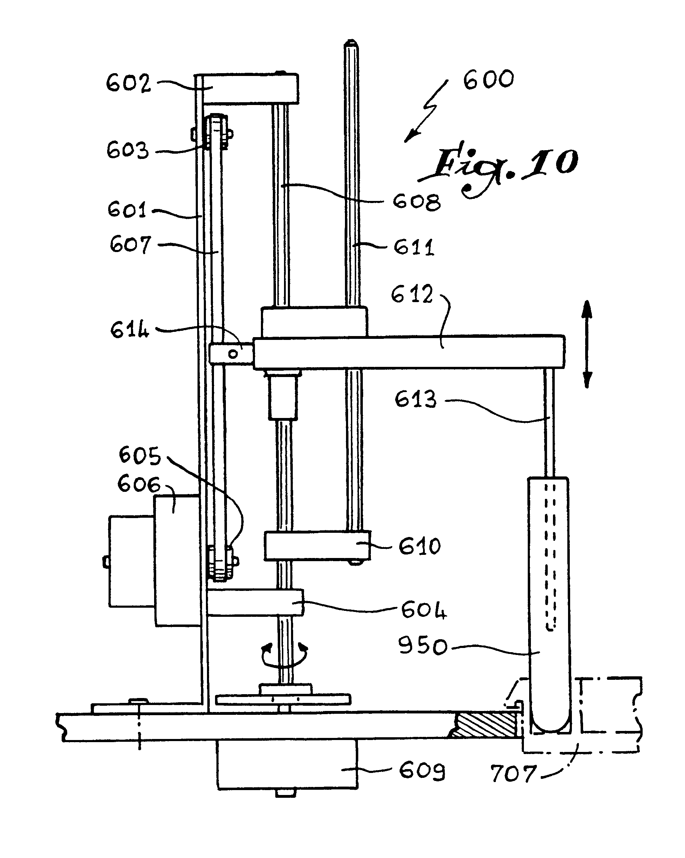

On a montré en fig. 10 le poste 600 pour le prélèvement des produits à distribuer dans les alvéoles 403 de la micro-plaquette 400. Ce poste de prélèvement est constitué d'une potence verticale 601 fixée sur la table 200 et qui comprend d'une part à son extrémité supérieure un guide fixe 602 sous lequel est prévue une poulie 603 libre en rotation, et d'autre part à son extrémité inférieure un autre guide fixe 604 au-dessus duquel une autre poulie 605 est montée sur l'arbre de sortie d'un moteur pas à pas 606 et est reliée à la poulie 603 par l'intermédiaire d'une courroie d'entraînement 607.

Les guides 602 et 604 sont percés d'un trou débouchant aligné pour le passage d'une colonne verticale 608 dont l'extrémité inférieure coopère avec l'arbre de sortie d'un moteur pas à pas 609 situé sous la table 200, de sorte qu'il entraîne en rotation ladite colonne 608 soit dans un sens, soit dans l'autre.

Entre les guides 602 et 604 sont prévus d'une part un support 610 solidaire de la colonne 608 lequel est fixée une colonne verticale 611, et d'autre part une poutre horizontale 612 montée libre en rotation et en translation sur les colonnes 608 et 611.

L'extrémité libre de la poutre 612 comporte une sonde de prélèvement 613 permettant la distribution des produits contenus dans les tubes échantillons 950, tandis que l'extrémité opposée comprend un clip 614 fixé sur la courroie 607 de manière à entraîner verticalement le long des colonnes 608 et 611 ladite poutre 612.

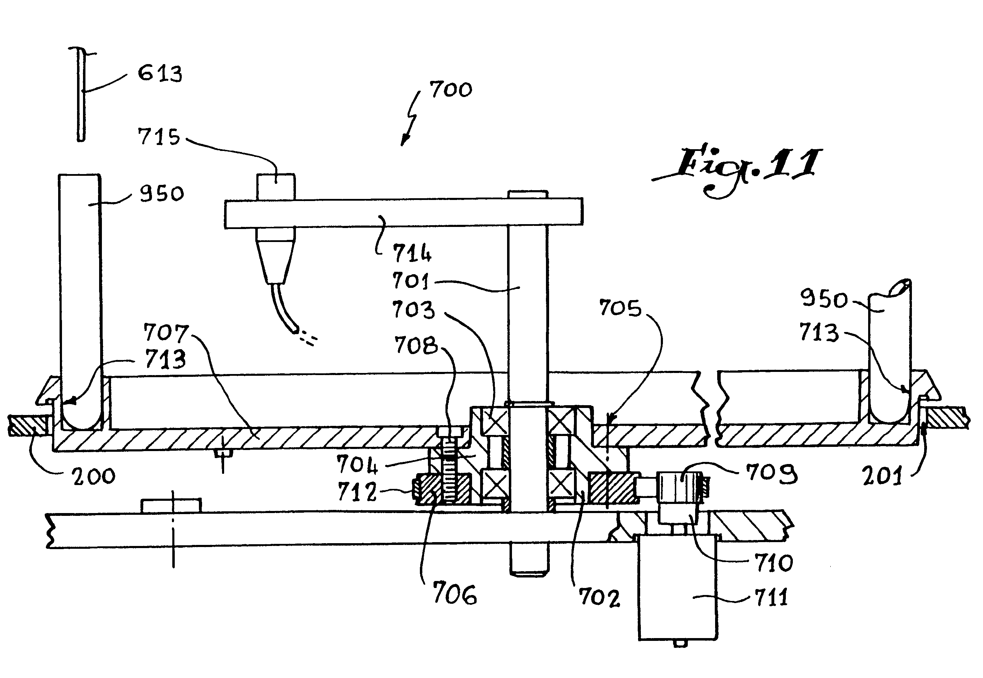

On a montré en fig. 11 le poste de distribution 700 établi dans une ouverture 201 de la table de transfert 200. Il se compose d'un arbre 701 fixe en rotation au moyen de son extrémité inférieure qui est montée serrée dans une platine 202 rapportée sous la table 200. L'arbre 701 ou axe de rotation comprend au-dessus de la platine 201 une bague 702 pourvue dans sa partie interne d'un dispositif de roulement 703, tandis que la partie externe comporte en son milieu une couronne 704 percée de trous 705. La couronne 704 est prise en sandwich entre une poulie 706 et un disque ou rotor 707 en matière plastique rendus solidaire au moyen de vis 708. La poulie 706 est entraînée en rotation par l'intermédiaire d'une courroie 712 et d'une autre poulie 709 montée sur l'arbre de sortie 710 d'un moteur pas à pas 711. Le rotor 707 est centré sur la bague 702 de manière à se trouver dans l'ouverture 201 de la table 200. Il comprend sur sa périphérie un certain nombre d'encoches numérotées 713, permettant la retenue de la base des tubes échantillons 950. En outre, le rotor 707 est indexé dans sa rotation par un dispositif (non représenté) de manière à présenter chaque tube échantillon 950 au-dessous de la sonde de prélèvement 613.

L'extrémité supérieure de l'arbre 701 supporte un bras 714 libre en rotation, dont l'extrémité libre est solidaire d'un récipient 715 pour la dilution des produits à distribuer et le lavage de la sonde de prélèvement 613.

Le fonctionnement et le mode d'utilisation de l'automate analyseur 100 ci-dessus décrit se comprennent aisément. L'opérateur doit procéder à la manière suivante :

Il introduit manuellement deux micro-plaquettes 400 dans les supports 318 et entre la bride rainurée 322 de la centrifugeuse 300, ainsi que les tubes échantillons 950 dans les encoches 713 du poste de distribution 700.

Il charge tout d'abord les tubes contenant les réactifs dans les encoches numérotées de 1 à N (étant donné que le nombre des réactifs peut varier suivant le type d'analyses effectuées) et ensuite les tubes remplis de sang centrifugé de chacun des patients à analyser dans les encoches N à 60.

Il déclenche une unité de gestion électronique (non représentée) qui va prendre en charge l'automate analyseur 100 pour lui faire réaliser les étapes qui vont suivre jusqu'au résultat de l'analyse :

– Verrouillage des micro-plaquettes 400 dans les supports 318 au moyen de la pince de transfert 500 effectué de la manière suivante : (fig. 5 à 7)

– la pince 500 se trouvant légèrement au-dessus du support 318, elle peut venir engager la micro-plaquette 400 dans les rainures 504 et 505 de l'évidement 501 afin de la pousser contre les butées à ressort 324 pour que le doigt 328 soulève le verrou basculant 325 qui vient se loger dans l'encoche 511 de la pince et contre la butée de fin de course 327 du support 318. Ensuite la pince 500 se retire, ce qui provoque, sous l'effet des butées à ressort 324, un déplacement latéral de la microplaquette 400 qui vient en contact avec le verrou basculant 325 afin d'être bloquée latéralement et horizontalement par les brides rainurées 322 qui coopèrent avec les épaulements 401 de la micro-plaquette. Le doigt 328 se retire de manière à laisser pivoter la centrifugeuse d'un demi-tour pour effectuer la même opération sur la seconde micro-plaquette ;

– cette étape de verrouillage des micro-plaquettes permet l'initiation du cycle de travail et une sécurité du bon fonctionnement du dispositif.

- Retour de la pince en position initiale 0.

- Indexation de la centrifugeuse 300 par l'intermédiaire du dispositif 307 de manière à ce que les micro-plaquettes soient en position de transfert.

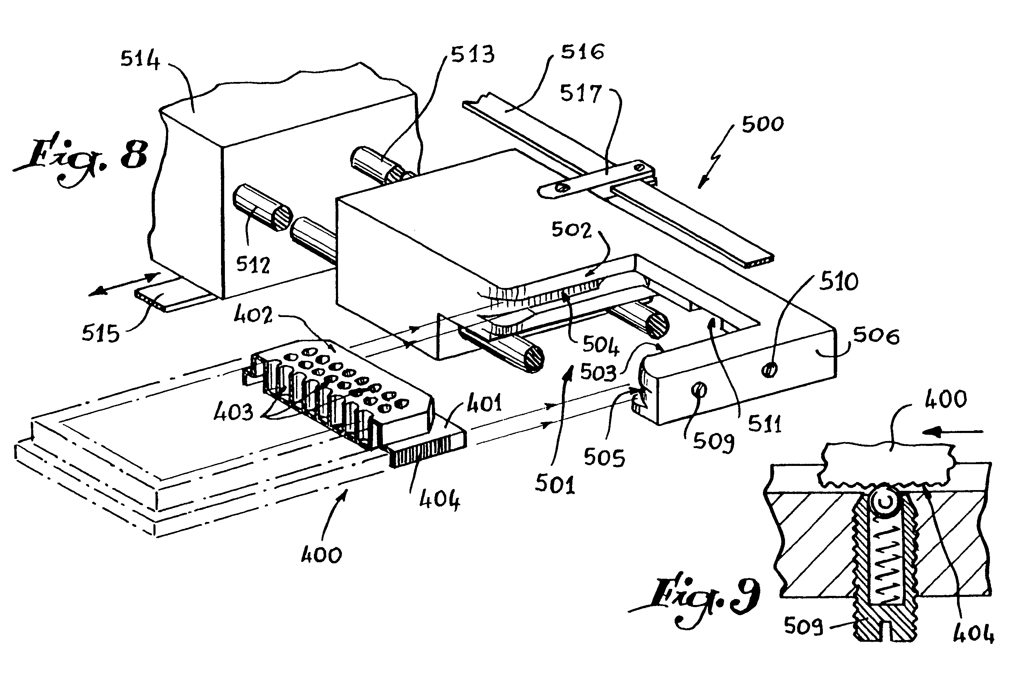

- Déverrouillage et transfert de la micro-plaquette à l'aide de la pince 500 sous le poste de prélèvement 600 et de distribution 700. La libération de la micro-plaquette 400 (fig. 7) se réalise lorsque cette dernière est engagée dans les rainures 504 et 505 de la pince 500, de manière à pousser les butées à ressort 324 pour que le verrou basculant 325 pivote sous son propre poids vers le bas.

- Indentification des tubes échantillons 950 aux moyens d'une caméra CCD 910 et d'un lecteur code-barres 920.

– lecture du niveau de sang pour déterminer la quantité à prélever, et du positionnement de l'étiquette code-barres comportant les références du patient par la caméra CCD 910 ;

– dans le cas où les tubes échantillons 950 sont correctement positionnés, ils sont déplacés devant le lecteur code-barres 920 de manière à relever les références du patient et le numéro de l'encoche 713 du rotor 707 et à introduire ces données dans la mémoire de l'unité de gestion ;

– dans le cas ou les tubes échantillons 950 sont mal introduits, l'unité électronique émet un signal à l'opérateur qui doit les remettre dans la bonne position.

- Prélèvement du sang centrifugé (hématie-sérum) de chacun des patients au moyen de la sonde 613 pour les distribuer dans les alvéoles 403 de la micro-plaquette 400 ;

– cette distribution est réalisée selon la configuration réactive choisie, car elle peut être effectuée soit en ligne, soit en colonne, c'est-à-dire que chaque ligne ou chaque colonne représente un patient ;

– la sonde 613 est lavée dans le récipient 715 entre deux prélèvements (hématie diluée, sérum, hématie + sérum) et entre deux patients.

- Prélèvement des réactifs par la sonde 613 et distribution selon la configuration choisie ;

– lavage de la sonde 613 dans le récipient 715 entre les réactifs distribués.

- Agitation de la micro-plaquette 400 par le déplacement de la pince 500 suivant les axes des abscisses XX' et des ordonnées YY' suivant une fréquence variable.

- Transfert de la micro-plaquette sur la centrifugeuse.

- Verrouillage de la micro-plaquette.

- Rotation d'un demi-tour de la centrifugeuse et indexation si la micro-plaquette comporte plus de quatre patients pour remplir la seconde micro-plaquette :

– soit d'eau physiologique si le nombre des patients est inférieur à 8 ou 12 selon la configuration choisie de manière à équilibrer le balourd de la centrifugeuse ;

– soit d'une nouvelle distribution de sang et de réactifs si le nombre des patients est supérieur à 8 ou 12 selon la configuration.

- Centrifugation des micro-plaquettes 400 pendant 2 mn à 1400 tours.

- Ré-indexation de la centrifugeuse pour que la première micro-plaquette remplie se trouve en position de transfert.

- Déverrouillage de la micro-plaquette au moyen de la pince 500.

- Agitation de la micro-plaquette suivant les axes des abscisses et des ordonnées de la pince de manière à mettre en suspension les éventuels agglutinats.

- Déplacement sous le poste de lecture 800 comprenant une caméra CCD 801 permettant l'interprétation des résultats et l'affichage sur écran du spectre négatif ou positif du groupe sanguin de chaque patient.

On observera que la manipulation des micro-plaquettes de la centrifugeuse aux différents postes de travail peut être réalisée par tout autre moyen.

## Revendications

1. Automate analyseur de groupage sanguin, du genre comportant un rotor (707) pourvu sur sa périphérie d'un certain nombre d'encoches (713) pour la retenue de tubes échantillons (950), tandis qu'une sonde de prélèvement (613) permet de distribuer le contenu desdits tubes dans les alvéoles (403) d'une micro-plaquette (400), caractérisé en ce qu'il comprend d'une part une centrifugeuse (300) pour la mise en place des micro-plaquettes (400) et leur centrifugation, comportant deux supports opposés (318) articulés aux extrémités (314) d'une poutre (313) entraînée en rotation par un moteur à courant continu (312), et d'autre part une pince de transfert (500) commandée suivant les axes des abscisses XX' et des ordonnées YY' par deux moteurs pas à pas (520, 521) de manière à transporter les micro-plaquettes (400) de la centrifugeuse (300) aux différents postes de travail établis sur une table (200).

2. Automate suivant la revendication 1, caractérisé en ce que chaque support (318), à profil en forme de T est découpé d'un évidement (321) comportant d'une part dans la partie horizontale du T et sur ses bords latéraux une paire de brides rainurées (322) pour le guidage des micro-plaquettes (400), et d'autre part, à l'une des extrémités de la partie verticale du T, une encoche (326) dans laquelle est logé un verrou basculant (325) auquel est opposée au moins une butée à ressort (324) pour le verrouillage de ladite micro-plaquette (400).

3. Automate suivant l'une quelconque des revendications 1 et 2, caractérisé en ce que le verrouillage des micro-plaquettes (400) est réalisé au moyen d'une pince (500) qui pousse cette dernière contre la butée à ressort (324) de manière à ce qu'un doigt (328) commandé en rotation par un moteur pas à pas (329), maintienne soulevé le verrou basculant (325) contre une butée (327) jusqu'à la libération de ladite micro-plaquette (400) pour la bloquer entre ledit verrou et ladite butée à ressort.

4. Automate suivant la revendication 1, caractérisé en ce que la pince-transfert (500), réalisée en une matière plastique, comporte un évidement (501) en forme de U renversé sur le côté, de sorte que ses faces intérieures et opposées (502 et 503) sont pourvues chacune d'une rainure (504 et 505) permettant de guider axialement la micro-plaquette (400), tandis que la rainure (505) comprend des trous débouchants (507 et 508) pour la fixation de butées à billes (509 et 510) afin de verrouiller ladite micro-plaquette.

Fig.1

EP 0 445 053 A1

*Fig. 2*

EP 0 445 053 A1

Fig. 4

Fig. 3

9

Fig. 5

Fig. 6

Fig. 7

Fig. 8

Fig. 9

EP 0 445 053 A1

Fig. 10

*Fig.11*

613

700

715

950

714
701
703
708

705

950
713

707
713

200

704
712

706

702

709

201

710

711

EP 0 445 053 A1

Office européen
des brevets

# RAPPORT DE RECHERCHE EUROPEENNE

Numero de la demande

EP 91 42 0070

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 193 016 (ALLIED CORP.) <br> * Page 2, lignes 8-20; page 3, ligne 9 - page 4, ligne 30; figures 3,4,7-9 * <br> --- | 1,4 | G 01 N 35/02 <br> B 04 B 5/04 <br> G 01 N 33/48 |
| A | FR-A-2 629 370 (SOCIETE IBAL, S.A.R.L.) <br> * Figures 3,4; page 1, ligne 5 - page 2, ligne 14; page 9, lignes 16-22; page 10, lignes 6-11; page 11, lignes 1-7 * <br> --- | 1,2 | |
| A | US-A-4 147 294 (H.R. DAVIDSON et al.) <br> * Figure 1; colonne 1, lignes 11-24 * <br> --- | 1 | |
| A | EP-A-0 316 833 (PROLIC S.A.) <br> --- | | |
| A | EP-A-0 160 906 (KONTRON-HOLDING AG) <br> ----- | | |

### DOMAINES TECHNIQUES RECHERCHES (Int. Cl.5)

B 04 B
G 01 N

Le présent rapport a été établi pour toutes les revendications

| Lieu de la recherche | Date d'achèvement de la recherche | Examinateur |
|---|---|---|
| LA HAYE | 28-05-1991 | HODSON C.M.T. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...........................................................
& : membre de la même famille, document correspondant

EPO FORM 1503 03.82 (P0402)